# EUROPEAN PATENT APPLICATION

(11) **EP 1 183 933 A1**
(43) Date of publication of application: **06.03.2002**
(21) Application number: 01307453.9
(22) Date of filing: 03.09.2001
(51) Int. Cl.: A01D 34/60, A01D 75/30

(54) **Turf-care apparatus with hydraulic power transmission**

(30) Priority: 01.09.2000 GB 0021486
(71) Applicant: Ransomes Jacobsen Limited, Ipswich, Suffolk IP3 9QG (GB)
(72) Inventor: Walker, Alan, Ipswich, Suffolk, IP5 2EE (GB); Cracknell, Ray Clava, Bury St. Edmunds, Suffolk (GB)
(74) Representative: Moir, Michael Christopher

(57) **Abstract**

A hydraulic power transmission comprising a first circuit (66) comprising a plurality of hydraulic motors in series, a second circuit (68) comprising at least one hydraulic motor, the first and second circuits being arranged in parallel with each other to receive hydraulic fluid under pressure from a common source, a hydraulic motor (50') of the first circuit and a hydraulic motor (50'') of the second circuit being arranged together to drive a common driven element (36').

## Description

This invention relates to a turf-care apparatus with hydraulic power transmission. It is of particular utility for a grass-mowing machine but may also be used for other turf-care purposes. In principle it is applicable to any turf-care machinery having a hydraulic power transmission in which several hydraulic motors are powered from a common supply of hydraulic pressure fluid. The term "hydraulic" of course is used broadly to mean liquid eg. oil for transmitting power, and is not limited to its literal meaning of water.

Large grass-mowing machines such as are used in the management of parks, golf courses, sports grounds etc. generally comprise a number (for example from three to seven) cutters. These cutters can comprise blades rotating about respective vertical axes but more usually are cylindrical cutters each with a number (eg. six, eight or ten) helical blades and rotating about respective horizontal axes. The cutters are either mounted directly on a tractor unit or are towed as an array behind a tractor. In both cases the cutters are driven by hydraulic pressure fluid supplied by an engine-driven hydraulic pump on the tractor.

It is important that the cutters all rotate at approximately the same speed, in order that a uniform finish is given to the grass. In known mowers this is achieved by using identical motors for each reel and by seeking to equalise the pressure drop across each of them. This either requires the motors to be arranged in series, resulting in a higher system pressure being necessary, which necessitates more expensive components, or split-parallel in which case an expensive flow divider is required to proportion the flow accurately between two parallel branches of series motors.

The present invention in at least its preferred embodiments seeks to offer an alternative more economic solution.

The invention provides a turf-care apparatus with a hydraulic power transmission comprising a first circuit comprising a plurality of hydraulic motors in series, and a second circuit comprising at least one hydraulic motor, the first and second circuits being arranged in parallel with each other to receive hydraulic fluid under pressure from a common source, a hydraulic motor of the first circuit and a hydraulic motor of the second circuit being arranged together to drive a common driven element.

The second circuit may comprise a plurality of hydraulic motors.

Preferably the motors arranged to drive the common element lie in corresponding positions in the first and second drive circuits. Thus the motors may be the most upstream motors in the first and second circuits.

Preferably the hydraulic motors arranged to drive the common element are mechanically connected together by said common element.

There may be means for relieving pressure in a said circuit, either to the other circuit or to drain.

Preferably the pressure relieving means relieves the pressure in the circuit immediately downstream of the motor arranged to drive the common element.

Preferably all of the hydraulic motors are of the same nominal capacity.

The machine may have an odd number of rotating reels or other cutters as driven elements, the said common driven element being a cutter disposed on the centre line of the machine.

The invention will now be described merely by way of example with reference to the accompanying drawings, wherein:
Figure 1 shows relevant features of a known grass-mowing machine;
Figures 2 and 3 show alternative known hydraulic power transmissions for the machine of figure 1, and
Figure 4 shows a hydraulic power transmission for use in the present invention.

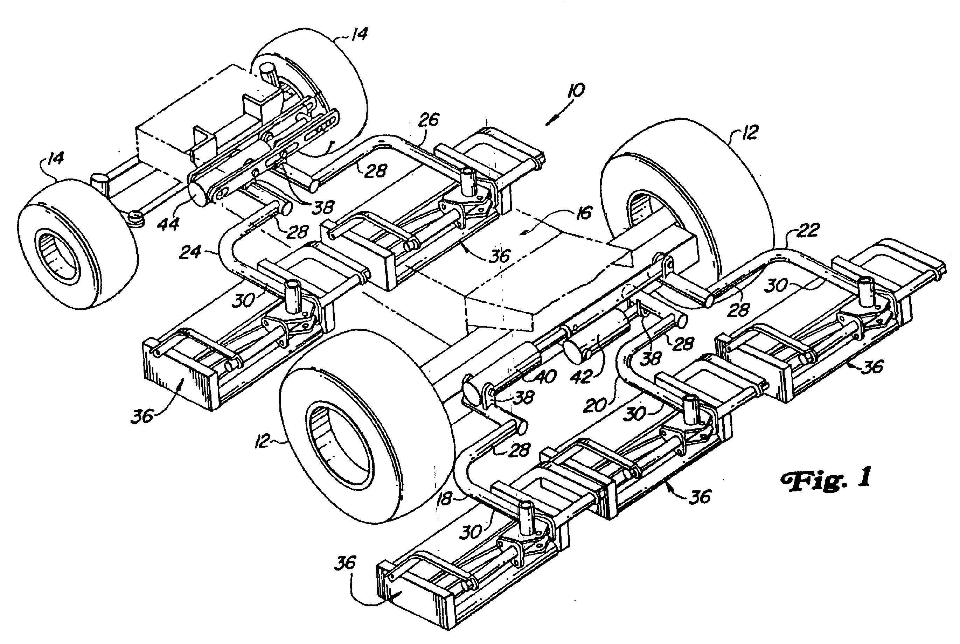

Referring to figure 1, (based for convenience on figure 1 of EP 0569836), there is shown a five-reel ride-on self-propelled grass mower 10 for use for example in public parks or for fairway mowing on golf courses. The mower comprises a chassis 16 carried by front wheels 12 and rear wheels 14 and provided with five cutting decks having cylindrical reels 36 with helical blades, each reel cooperating with a fixed lower blade as well known per se. The decks are supported from the chassis by hydraulically-operated lifting mechanisms 18, 20, 22, 24, 26, 38, 40, 42, 44 which are known per se and will not be discussed further here.

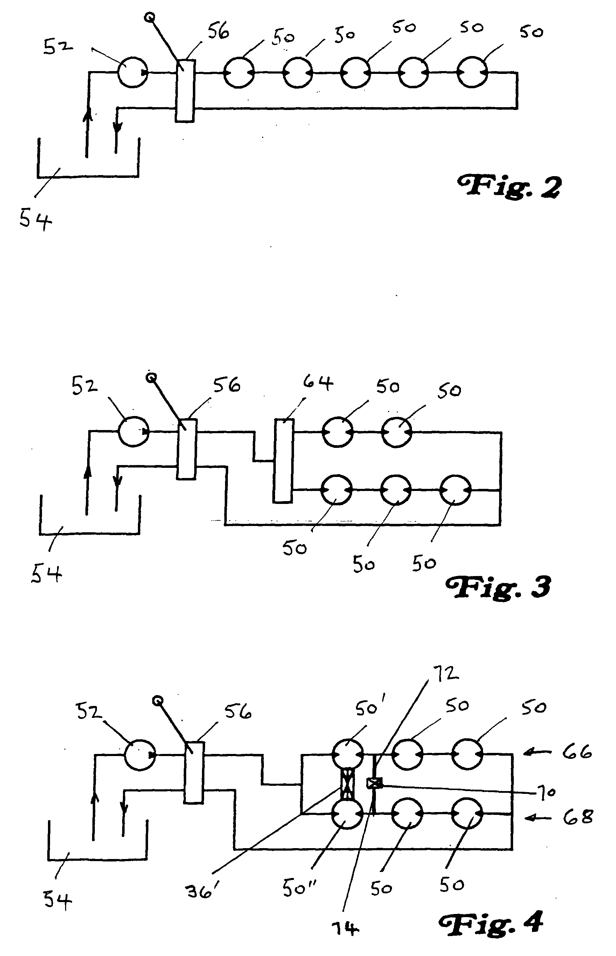

It can be seen that the decks are arranged with three side-by side in front of the chassis and two side-by-side between the front and rear wheels and staggered relative to the front three so as to cut overlapping swaths of grass. Each reel 36 is driven by a respective hydraulic motor 50 (figure 2, not visible in figure 1) mounted on the deck and supplied with hydraulic pressure fluid from a common pump 52, figure 2 mounted on the chassis 16 and driven by the engine of the mower.

Referring to figure 2, the motors 50 are arranged in series in a closed circuit, the pump 52 drawing hydraulic fluid from a reservoir or sump 54, directing it through a manually operated control valve 56 to the motors and hence back to the reservoir.

The motors are of identical design and nominally produce the same power output at the same speed for the same pressure drop across them. Thus in a typical 200KPa (3000 lbf/in²) system, the pressure drop across each motor will be 40KPa (600 lbf/in²), assuming that the cutting load presented by the grass is the same for each. Provided that the internal case-to-drain leakage of the motors is negligible, the flow through each will be the same and the reels will each be driven at the same speed. However, in practice the internal leakage becomes significant as the motors wear, and then the reels driven by the more downstream motors rotate more slowly then the upstream ones, because the flow through their motors is less.

A prior art alleviation of this difficulty is to arrange the motors 50 in two shorter series branches or chains 60, 62 in parallel with each other, as shown in figure 3. Then the flow through the downstream motors is less attenuated by leakage from the upstream ones, but there is a cost penalty in that an expensive flow splitter 64 is required. In this case a positive-displacement 3:2 flow splitter is necessary to divide the flow accurately between the three motors in one branch and the two in the other.

Referring to figure 4, the use of a flow splitter is avoided in the present invention by employing two motors 50', 50" to drive a single one of the reels 36'. These two motors are identical to the motors 50 driving the other reels, and as can be seen the total of six motors for five reels are arranged in two parallel series branches 66, 68, of three motors each, one motor 50' being in one chain 66, the other motor 50" being in the other chain 63. Because the motors 50', 50" are mechanically coupled-together via the reel 36', they are constrained to rotate at exactly the same speed. Thus, because the motors 50', 50" are identical, the flow through them is the same and together they accurately divide the flow equally between the two branches 66, 68. Again making the reasonable assumption that the cutting load on each reel is the same, the pressure drop across each of the motors 50', 50" will be one-half of that across each of the other motors.

A pressure relief valve 70 is provided to relieve excess pressure generated by a coupled motor 50' or 50" in its branch 66 or 68, by diverting pressure fluid from that branch to the other branch. Excess pressure may occur for example if one of the downstream reels is jammed by a stone or other debris. The motor 50' or 50" does not merely stall because it becomes driven by the other coupled motor, and high pressures thus may arise. The relief valve 70 is connected by pipes 72, 74 so as to bridge the branches 66, 68. The diverted flow will cause an increase in speed of the motors receiving the diverted flow, but the system will in any event be shut down quickly by the operator when alerted to the stalled cutter. Alerting conveniently can be achieved by a pressure sensor in each branch or by a switch incorporated in valve 70 and responsive to the opening of the valve. Suitable values of differential pressure between the two branches above which the pressure relief valve diverts pressure fluid are, for example, 100 bar, 124 bar (=1800 psi) or 150 bar.

A further relief valve is provided in control valve 56, to divert all pressure fluid delivered by the pump 52 to drain in the event of serious overpressure, in order to protect the pump. This valve is set to relieve at a relatively high pressure, to prevent unwanted venting in response to transmit pressure spikes, which would otherwise limit the power deliverable to the cutters.

If preferred, the relief valve 70 could be replaced by a separate relief valve in each branch 66, 68 immediately downstream of the coupled motor 50' or 50", and venting the relieved fluid back to the reservoir 54.

Although the motors 50', 50" are shown as the upstream motors in each branch, they can equally well be more downstream motors, and indeed they need not be correspondingly positioned in each branch. If the coupled motors are the most downstream in each branch, the relief valve 70 becomes unnecessary.

A further advantage of the arrangement of figure 4 is that a lower maximum system pressure can be employed for a given total power delivered to the reels, or conversely greater power can be obtained for a maximum system pressure. For example, for a nominal system pressure of 200KPa (3000 lbf/in²) the pressure drop across the motors 50', 50" could be 40KPa, and across each of the other motors 80KPa, enabling twice the power for a given flow to be delivered to each reel.

It will be appreciated that in figure 4 an odd number of reels are driven by an even number of motors. If it is required to apply the invention to a system having an-even number of reels, it is necessary to have two pairs of coupled-together motors, each pair respectively driving a common reel or other driven element. However there can still be a cost and operational advantage compared to using a dedicated flow-splitter.

In the illustrated embodiment, the most convenient mechanical and hydraulic layout of the mower is likely to be achieved if the reel 36' driven by two motors 50', 50" is the centre one of the gang of three at the front of the mower of figure 1, on its centre line.

Each feature disclosed in this specification (which term includes the claims) and/or shown in the drawings may be incorporated in the invention independently of other disclosed and/or illustrated features. Statements in this specification of the "objects of the invention" relate to preferred embodiments of the invention, but not necessarily to all embodiments of the invention falling within the claims.

## Claims

1. A turf-care apparatus with a hydraulic power transmission comprising a first circuit comprising a plurality of hydraulic motors in series, and a second circuit comprising at least one hydraulic motor, the first and second circuits being arranged in parallel with each other to receive hydraulic fluid under pressure from a common source, a hydraulic motor of the first circuit and a hydraulic motor of the second circuit being arranged together to drive a common driven element.

2. A turf-care apparatus as claimed in claim 1, wherein the second circuit comprises a plurality of hydraulic motors.

3. A turf-care apparatus as claimed in claim 2, wherein the motors arranged to drive the common element lie in corresponding positions in the first and second circuits.

4. A turf-care apparatus as claimed in claim 3, wherein the motors arranged to drive the common element are the most upstream motors in the first and second circuits.

5. A turf-care apparatus as claimed in any preceding claim wherein the hydraulic motors arranged to drive the common element are mechanically connected together by said common element.

6. A turf-care apparatus as claimed in any preceding claim comprising means for relieving pressure in a said circuit.

7. A turf-care apparatus as claimed in claim 6, wherein the pressure relieving means relieves the pressure in the circuit immediately downstream of the motor arranged to drive the common element.

8. A turf-care apparatus as claimed in claim 7, wherein the pressure relieving means relieves the pressure in the first circuit by permitting hydraulic fluid in the first circuit immediately downstream of the motor arranged to drive the common element to pass into the second circuit.

9. A turf-care apparatus as claimed in claim 7 or 8, wherein the pressure relieving means relieves the pressure in the second circuit by permitting hydraulic fluid in the second circuit immediately downstream of the motor arranged to drive the common element pass into the first circuit.

10. A turf-care apparatus as claimed in any one of claims 6 to 9, wherein the means for relieving pressure in a said circuit operates to divert fluid when the differential pressure across the valve exceeds one of 100 bar, 124 bar and 150 bar.

11. A turf-care apparatus as claimed in any preceding claim, wherein all of the hydraulic motors are of the same nominal capacity.

12. A turf-care apparatus as claimed in any preceding claim, being a grass-mowing machine.

13. A turf-care apparatus as claimed in claim 12 having an odd number of rotating reels or other cutters as driven elements, the said common driven element being a cutter disposed on the centre line of the machine.

14. A turf-care apparatus substantially as herein described with reference to the accompanying drawings.
